(19) Europäisches Patentamt
European Patent Office
Office européen des brevets

(11) **EP 2 432 975 B1**

(12) **EUROPÄISCHE PATENTSCHRIFT**

(45) Veröffentlichungstag und Bekanntmachung des Hinweises auf die Patenterteilung:
**19.07.2017   Patentblatt 2017/29**

(21) Anmeldenummer: **10713959.4**

(22) Anmeldetag: **15.04.2010**

(51) Int Cl.:
**F01K 25/04** *(2006.01)*   **F01K 25/02** *(2006.01)*
**F01K 25/10** *(2006.01)*

(86) Internationale Anmeldenummer:
**PCT/EP2010/054969**

(87) Internationale Veröffentlichungsnummer:
**WO 2010/127932 (11.11.2010 Gazette 2010/45)**

(54) **VERFAHREN ZUR ERZEUGUNG ELEKTRISCHER ENERGIE SOWIE VERWENDUNG EINES ARBEITSMITTELS**

METHOD FOR GENERATING ELECTRICAL ENERGY, AND USE OF A WORKING SUBSTANCE

PROCÉDÉ DE PRODUCTION D'ÉNERGIE ÉLECTRIQUE ET UTILISATION D'UN FLUIDE DE TRAVAIL

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **07.05.2009   DE 102009020268**

(43) Veröffentlichungstag der Anmeldung:
**28.03.2012   Patentblatt 2012/13**

(73) Patentinhaber: **Kalina Power Limited**
**Hawthorn VIC 3122 (AU)**

(72) Erfinder:
• **BOZEK, Ewa**
**76187 Karlsruhe (DE)**
• **FENZ, Michael**
**91054 Erlangen (DE)**
• **HIMMLER, Klaus**
**63546 Hammersbach (DE)**
• **JOH, Ralph**
**63500 Seligenstadt (DE)**
• **LENGERT, Jörg**
**91475 Lonnerstadt-Ailsbach (DE)**

(74) Vertreter: **Stork Bamberger Patentanwälte PartmbB**
**Meiendorfer Strasse 89**
**22145 Hamburg (DE)**

(56) Entgegenhaltungen:
EP-A1- 2 017 291          WO-A1-2009/045196
WO-A2-2007/008225      GB-A- 1 242 935
US-A1- 2007 245 733     US-A1- 2009 151 250

**Beschreibung**

Die Erfindung betrifft Verfahren zur Erzeugung elektrischer Energie mittels mindestens einer Niedertemperaturwärmequelle, wobei ein VPT-Kreisprozess durchgeführt wird.

Aufgrund der weltweit stetig steigenden Energiepreise erlangen Systeme zur Nutzung von Abwärme auch im Niedertemperaturbereich von bis zu 400°C, wie beispielsweise in Form von Geothermie oder Abwärme eines industriellen Prozesses, immer größere Bedeutung.

Mittels eines VPT-Kreisprozesses wird Wärme einer Niedertemperaturwärmequelle intensiver genutzt als bei einem herkömmlichen ORC-Kreisprozess (ORC: Organic Rankine Cycle), der organische, häufig umweltbelastende Arbeitsmittel einsetzt, oder als bei einem sogenannten Kalina-Kreisprozess, der technisch aufwendig ist und als Arbeitsmittel ein AmmoniakWasser-Gemisch verwendet.

Ein VPT-Kreisprozess basiert auf einer Turbine (VPT: Variable Phase Turbine), die mittels einer gasförmigen Phase oder einer flüssigen Phase oder auch einem Gemisch aus einer gasförmigen und einer flüssigen Phase angetrieben werden kann. Eine derartige Turbine ist aus US 7,093,503 B1 bekannt.

US 7,093,503 B1 offenbart in Figur 7 ein Verfahren zur Erzeugung elektrischer Energie mittels mindestens einer Niedertemperaturwärmequelle, wobei ein VPT-Kreisprozess durchgeführt wird. Als Niedertemperaturwärmequelle dient dabei ein mittels Geothermie beheiztes Fluid, welches Wärme an ein Arbeitsmittel überträgt. Das Arbeitsmittel wird der Turbine zugeführt und mittels einer Düse expandiert. Der erzeugte Strahl an Arbeitsmittel weist kinetische Energie auf, welche unter Erzeugung elektrischer Energie einen Rotor eines Generators antreibt. Das Arbeitsmittel (gasförmig oder gasförmig/flüssig) wird abgekühlt, kondensiert und über eine Pumpe geführt, durch welche der Druck im Arbeitsmittel erhöht wird. Das Arbeitsmittel wird anschließend gemäß der US 7,093,503 B1 insgesamt erneut der Turbine zur Kühlung des Generators und zur Schmierung der Dichtungen in der Turbine zugeführt. Nach Austritt aus der Turbine wird erneut mittels des durch Geothermie beheizten Fluids Wärme an das Arbeitsmittel übertragen und damit der Kreis geschlossen.

In einer aus der US 7,093,503 B1 nicht hervorgehenden Betriebsweise kann die Kühlung des Generators und Schmierung der Dichtungen in der Turbine auch erfolgen, indem lediglich ein Teil des Arbeitsmittels erneut der Turbine zur Kühlung des Generators und zur Schmierung der Dichtungen in der Turbine zugeführt wird. Der zur Turbine abgezweigte Teil wird nach dessen Austritt aus der Turbine wieder mit dem restlichen Teil des Arbeitsmittels vereint. Der Kreis wird geschlossen, indem anschließend erneut mittels des durch Geothermie beheizten Fluids Wärme an das Arbeitsmittel übertragen wird. Somit wird hier ebenso ein Kreisprozess als VPT-Kreisprozess bezeichnet, bei dem das Arbeitsmittel nach der Pumpe lediglich teilweise ein weiteres Mal der Turbine zugeführt wird.

In einer weiteren aus der US 7,093,503 B1 nicht hervorgehende Betriebsweise kann die Kühlung des Generators und Schmierung der Dichtungen in der Turbine auch über einen getrennten Schmiermittel- und/oder Kühlkreislauf erfolgen. Somit wird hier ebenso ein Kreisprozess als VPT-Kreisprozess bezeichnet, bei dem das Arbeitsmittel nach der Pumpe unmittelbar einer Erwärmung durch das mittels Geothermie beheizte Fluid zugeführt und damit der Kreis geschlossen wird, ohne dass das Arbeitsmittel ein weiteres Mal der Turbine zugeführt wird.

Das Arbeitsmittel zirkuliert in einem geschlossenen System. Es durchläuft dabei einen Wärmetauschbereich, in welchem Wärme der Niedertemperaturwärmequelle an das Arbeitsmittel übertragen wird, die Turbine, einen Kondensierbereich, eine Pumpe, optional erneut ganz oder teilweise die Turbine, um schließlich wieder dem Wärmetauschbereich zugeführt zu werden und das Kreissystem erneut zu durchlaufen.

Gemäß der US 7,093,503 B1 sind als Arbeitsmittel für einen VPT-Kreisprozess R134a (1,1,1,2-Tetrafluorethan) und R245fa (1,1,1,3,3-Pentafluoropropan) beschrieben.

Weiterhin ist auf der Internetseite der Firma Energent (http://www.energent.net/Projects%20VPT.htm) als Arbeitsmittel auch R245ca (1,1,2,2,3-Pentafluoropropan) zur Verwendung in einem VPT-Kreisprozess genannt.

Mit den bekannten Arbeitsmitteln sind beim VPT-Kreisprozess, bezogen auf eine Arbeitsmitteltemperatur von etwa 115°C, aber lediglich Wirkungsgrade von weniger als 11,5% erreichbar, d.h. es werden weniger als 11,5% der zur Verfügung stehenden thermischen Energie in elektrische Energie umgewandelt.

Es ist daher Aufgabe der Erfindung, den Wirkungsgrad eines Verfahrens zur Erzeugung elektrischer Energie mittels mindestens einer Niedertemperaturwärmequelle, wobei ein VPT-Kreisprozess durchgeführt wird, zu erhöhen.

Die Aufgabe wird durch ein erstes Verfahren zur Erzeugung elektrischer Energie mittels mindestens einer Niedertemperaturwärmequelle, wobei ein VPT-Kreisprozess durchgeführt wird, gelöst, indem als Arbeitsmittel für den VPT-Kreisprozess

a) mindestens ein Stoff aus der Gruppe umfassend Cycloalkane, Alkene, Diene oder Alkine verwendet wird, welcher zwei bis sechs Kohlenstoffatome aufweist, oder
b) mindestens ein Alkan aus der Gruppe umfassend 1-Chloro-1,2,2,2-tetrafluoroethan, 1-Chloro-1,1-difluoroethan, Methylchlorid, Bromodifluoromethan, Iodotrifluoromethan, 2-Methylpropan, eingesetzt wird, oder
c) mindestens ein Ether, welcher zwei Kohlenstoffatome aufweist, eingesetzt wird.

Die Aufgabe wird weiterhin gelöst durch ein zweites Verfahrens zur Erzeugung elektrischer Energie mittels mindestens einer Niedertemperaturwärmequelle, wobei ein VPT-Kreisprozess durchgeführt wird, wobei als Arbeitsmittel für den VPT-Kreisprozess mindestens ein Stoff eingesetzt wird, der in flüssiger Phase bei einer Temperatur von 115°C eine Fugazität von größer als 17 bar aufweist.

Unter einem VPT-Kreisprozess wird dabei ein jeder Kreisprozess verstanden, der eine VPT-Turbine umfasst, die mittels einer gasförmigen Phase als auch einer flüssigen Phase sowie auch einem Gemisch aus einer gasförmigen und einer flüssigen Phase antreibbar ist.

Damit ein Arbeitsmittel in flüssiger Phase vorliegt, muss gegebenenfalls der Druck des Arbeitsmittels entsprechend erhöht werden, beispielsweise mittels einer Pumpe. Bevorzugt sind hierbei insbesondere Kreiselpumpen.

Diese Verfahren führen zu einer Steigerung des Wirkungsgrades auf Werte von 12% und darüber.

Ein hinsichtlich des ersten Verfahrens bevorzugtes Cycloalkan ist Cyclopropan. Insbesondere geeignete Alkene sind das trans-2-Buten oder 1-Chloro-2,2-difluoroethylen. Als Diene eignen sich insbesondere 1,2-Butadien, 1,3-Butadien oder Propadien. Ein bevorzugtes Alkin ist Propin. Ein besonders bevorzugter Ether ist Dimethylether.

Hinsichtlich des zweiten Verfahrens wird als Arbeitsmittel für den VPT-Prozess bevorzugt ein Stoff aus der Gruppe umfassend 1-Chloro-1,2,2,2-tetrafluoroethan, 1-Chloro-1,1-difluoroethan, 2-Methylpropan, Isobuten, Cyclopropan, Propadien, Propin, Dimethylether, eingesetzt. So weist in flüssiger Phase bei 115°C 1-Chloro-1,2,2,2-tetrafluoroethan eine Fugazität von 21,6 bar auf, 1-Chloro-1,1-difluoroethan eine Fugazität von 19,9 bar auf, 2-Methylpropan eine Fugazität von 19,2 bar auf, Isobuten eine Fugazität von 17,9 bar auf, Cyclopropan eine Fugazität von 32,6 bar auf, Propadien eine Fugazität von 31,3 bar auf, Propin eine Fugazität von 30,1 bar auf, und Dimethylether eine Fugazität von 29,9 bar auf.

Insbesondere ist es von Vorteil, wenn hinsichtlich des zweiten Verfahrens als Arbeitsmittel für den VPT-Kreisprozess mindestens ein Stoff eingesetzt wird, der in flüssiger Phase bei einer Temperatur von 115°C eine Fugazität von größer als 20 bar, besonders bevorzugt von größer als 25 bar, aufweist.

Im Hinblick auf Umweltgesichtspunkte sind von den erwähnten Stoffen für beide Verfahren insbesondere die Halogen-freien Stoffe bevorzugt.

Weiterhin ist der Einsatz von Reinstoffen als Arbeitsmittel gegenüber einem Einsatz von Arbeitsmittelgemischen bevorzugt, da der apparative Aufwand für eine Anlage zur Durchführung eines VPT-Kreisprozesses dadurch sinkt.

Bevorzugt ist es, wenn als Arbeitsmittel für den VPT-Kreisprozess ein Stoff aus der Gruppe umfassend Cyclopropan, trans-2-Buten, 1-Chloro-2,2-difluoroethylen, 1-Chloro-1,2,2,2-tetrafluoroethan, Bromodifluoromethan, 1-Chloro-1,1-difluoroethan, Propadien, Propin, Methylchlorid, Iodotrifluoromethan, Dimethylether, eingesetzt wird. Dadurch ergibt sich eine Steigerung des Wirkungsgrads auf Werte von 12,5% und darüber.

Insbesondere wird als Arbeitsmittel für den VPT-Kreisprozess ein Stoff aus der Gruppe umfassend Cyclopropan, Propadien, Propin, Iodotrifluoromethan, Dimethylether, eingesetzt. Dadurch lässt sich eine Steigerung des Wirkungsgrads auf Werte von 13% und darüber erzielen.

Besonders bevorzugt ist der Einsatz von Dimethylether, Propin, Propadien oder Iodotrifluoromethan. Diese bewirken, dass der Wirkungsgrad auf Werte von 13,5% und darüber erhöht werden kann.

Ein Wirkungsgrad von 14% und darüber lässt sich vorteilhafter Weise erreichen, wenn als Arbeitsmittel Propadien eingesetzt wird.

Eine Verwendung eines Arbeitsmittels in Form

a) mindestens eines Stoffs aus der Gruppe umfassend Cycloalkane, Alkene, Diene oder Alkine, welcher zwei bis sechs Kohlenstoffatome aufweist, oder
b) mindestens eines Alkans aus der Gruppe umfassend 1-Chloro-1,2,2,2-tetrafluoroethan, 1-Chloro-1,1-difluoroethan, Methylchlorid, Bromodifluoromethan, Iodotrifluoromethan, 2-Methylpropan, oder
c) mindestens eines Ethers, welcher zwei Kohlenstoffatome aufweist,

für einen VPT-Kreisprozess zur Erzeugung elektrischer Energie mittels mindestens einer Niedertemperaturwärmequelle, ist ideal.

Weiterhin ist auch eine Verwendung eines Arbeitsmittels in Form mindestens eines Stoffs, der in flüssiger Phase bei einer Temperatur von 115°C eine Fugazität von größer als 17 bar aufweist, für einen VPT-Kreisprozess zur Erzeugung elektrischer Energie mittels mindestens einer Niedertemperaturwärmequelle, ideal.

Es hat sich bewährt, wenn die Niedertemperaturwärmequelle Temperaturen im Bereich von 90 bis 400°C, insbesondere im Bereich von 100 bis 250°C, bereitstellt. Besonders bevorzugt sind weiterhin Niedertemperaturwärmequellen mit Temperaturen im Bereich von 100 bis 150°C.

Eine Niedertemperaturwärmequelle wird vorzugsweise durch Geothermie gespeist, wobei bereits geringe Bohrtiefen im Erdboden ausreichen, um Abwärme im Temperaturbereich von 90 bis 250°C verfügbar zu machen.

Eine Niedertemperaturwärmequelle kann alternativ aber auch durch Abwärme eines industriellen Prozesses bereitgestellt werden. Industrielle Prozesse, die nutzbare Abwärme produzieren, basieren beispielsweise auf chemischen Reaktionen, Wärmebehandlungen, usw., wie sie in der chemischen oder pharmazeutischen Industrie, in der Stahlindustrie, der Papierindustrie, usw. häufig vorkommen.

Ein Temperaturunterschied von mindestens 5°C, insbesondere von mindestens 10°C, zwischen dem von der Niedertemperaturwärmequelle bereitgestellten Medium und dem Arbeitsmittel wird im Wärmetauschbereich bevorzugt.

In den Tabellen 1 bis 3 sind einige Arbeitsmittel hinsichtlich ihres Brutto-Wirkungsgrads $\eta$ einander gegenübergestellt, wobei die Arbeitsmittel in einem VPT-Kreisprozess von einer Niedertemperaturwärmequelle auf eine Temperatur von 115°C erwärmt wurden. Die Temperatur des Arbeitsmittels wurde dabei unmittelbar nach der Wärmeübertragung von der Niedertemperaturwärmequelle auf das Arbeitsmittel bestimmt.

Die nachfolgenden Tabellen beinhalten dabei zur Verwendung in einem VPT-Kreisprozess bereits bekannte Arbeitsmittel (fett gedruckt) sowie eine beispielhafte Auswahl an weiteren Arbeitsmitteln, von welchen ausgewählte zu höheren Wirkungsgraden führen.

Dabei bedeutet in den Tabellen $T_{kr}$ = kritische Temperatur.

Der Brutto-Wirkungsgrad berechnet sich nach der Formel

$$\eta = (W_{Turbine} / Q_{geothermal}) * 100\%$$

mit

$W_{Turbine}$ = Arbeit der Turbine (in J), wobei die Arbeit als absoluter Wert zu nehmen ist

$Q_{geothermal}$ = Wärme an der Grenze zwischen Niedertemperaturwärmequelle und Arbeitsmittel (in J)

Tabelle 1: Arbeitsmittel in Form von Alkenen im Vergleich zu bekannten Arbeitsmitteln

Tabelle 1

| Arbeitsmittel | Summen-formel | $T_{kr}$ [°C] | Brutto-Wirkungs-grad in % bei 115°C |
|---|---|---|---|
| **1,1,1,3,3-Pentafluoropropan [R245fa]** | **C3H3F5** | **157.5** | **11.44** |
| **1,1,2,2,3-Pentafluoropropan [R245ca]** | **C3H3F5** | **174.42** | **9.31** |
| 1-Chloro-2,2-difluoroethylen [R1122] | C2HClF2 | 127.4 | 12.59 |
| 2-trans-Buten | C4H8 | 155.45 | 12.77 |
| Isobuten | C4H8 | 149.25 | 12.04 |

Tabelle 2: Vergleich von Arbeitsmitteln in Form von Alkanen

Tabelle 2

| Arbeitsmittel | Summen-formel | $T_{kr}$ [°C] | Brutto-Wirkungs-grad in % bei 115°C |
|---|---|---|---|
| **1,1,1,3,3-Pentafluoropropan [R245fa]** | **C3H3F5** | **157.5** | **11.44** |
| **1,1,2,2,3-Pentafluoropropan [R245ca]** | **C3H3F5** | **174.42** | **9.31** |
| Methylchlorid [R40] | CH3Cl | 143.15 | 12.87 |
| Bromodifluoromethan [R22B1] | CHBrF2 | 138.83 | 12.82 |
| Iodotrifluoromethan | CF3I | 123.29 | 13.57 |
| Dichlorfluormethan [R21] | CHCl2F | 178.45 | 11.02 |
| 1,1-Dichlorotetrafluoroethan [R114a] | C2Cl2F4 | 145.5 | 11.2 |
| 1,2-Dichlorotetrafluoroethan [R114] | C2Cl2F4 | 145.7 | 11.5 |
| 1-Chloro-1,2,2,2-tetrafluoroethan [R124] | C2HClF4 | 122.5 | 12.72 |
| 1-Chloro-1,1-difluoroethan [R142b] | C2H3ClF2 | 137.2 | 12.63 |
| 1,1,1,3,3,3-Hexafluoropropan [R236fa] | C3H2F6 | 124.92 | 11.86 |
| 1,1,1,2,3,3-Hexafluoropropan [R236ea] | C3H2F6 | 139.23 | 10.95 |

(fortgesetzt)

| Arbeitsmittel | Summen-formel | $T_{kr}$ [°C] | Brutto-Wirkungs-grad in % bei 115°C |
|---|---|---|---|
| Cyclopropan | C3H6 | 124.85 | 13.18 |
| 2-Methylpropan | C4H10 | 135.65 | 12.43 |
| n-Butan [R600] | C4H10 | 152.05 | 11.87 |
| Perfluoropentan | C5F12 | 147.44 | 8.5 |

Tabelle 3: Arbeitsmittel in Form von Dienen, Alkinen oder Ethern im Vergleich zu bekannten Arbeitsmitteln

Tabelle 3

| Arbeitsmittel | Summen-formel | $T_{kr}$ [°C] | Brutto-Wirkungs-grad in % bei 115°C |
|---|---|---|---|
| **1,1,1,3,3-Pentafluoropropan [R245fa]** | **C3H3F5** | **157.5** | **11.44** |
| **1,1,2,2,3-Pentafluoropropan [R245ca]** | **C3H3F5** | **174.42** | **9.31** |
| Propadien | C3H4 | 120.75 | 14.22 |
| 1,2-Butadien | C4H6 | 170.55 | 12.01 |
| 1,3-Butadien | C4H6 | 151.85 | 12.36 |
| Propin | C3H4 | 129.25 | 13.66 |
| Dimethylether | C2H6O | 126.85 | 13.54 |

Die Figuren 1 bis 4 zeigen beispielhafte VPT-Kreisprozesse. So zeigt:

Figur 1    einen ersten VPT-Kreisprozess;
Figur 2    einen zweiten VPT-Kreisprozess;
Figur 3    einen dritten VPT-Kreisprozess; und
Figur 4    einen vierten VPT-Kreisprozess.

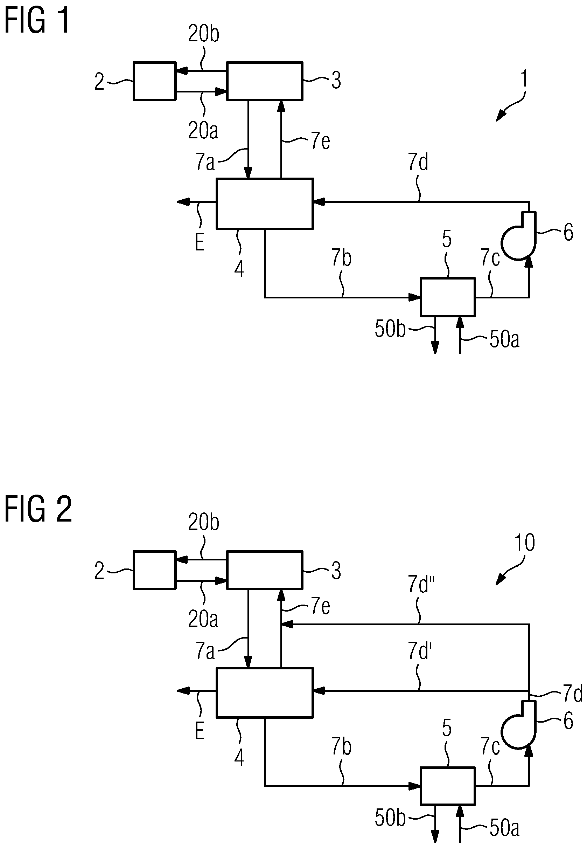

Figur 1 zeigt einen ersten VPT-Kreisprozess 1. Es ist eine Niedertemperaturwärmequelle 2 vorhanden, welche ein mittels Geothermie oder Abwärme eines industriellen Prozesses erwärmtes Fluid 20a bereitstellt. Ein mittels Geothermie bereitgestelltes Fluid ist insbesondere Thermalwasser. Das erwärmte Fluid 20a durchläuft einen Wärmetauschbereich 3, in welchem das erwärmte Fluid 20a einen Teil der darin gespeicherten Wärmeenergie an ein Arbeitsmittels 7e überträgt, das den Wärmetauschbereich 3 ebenfalls durchläuft. Als Arbeitsmittel 7e wird beispielsweise Propadien, Dimethylester, Cyclopropan, Propin oder Iodotrifluoromethan eingesetzt. Bei dem Wärmetauschbereich 3 handelt es sich beispielsweise um einen Wärmetauscher, insbesondere einen Kreuzstrom- oder Gegenstromwärmetauscher. Das mittels des erwärmten Fluids 20a erwärmte Arbeitsmittel 7a gelangt vom Wärmetauschbereich 3 in eine "Variable Phase" Turbine 4 (VPT) und wird dort mittels einer Düse expandiert.

Der erzeugte Strahl an Arbeitsmittel 7b weist kinetische Energie auf, welche unter Erzeugung elektrischer Energie E einen Rotor eines Generators antreibt. Das zumindest teilweise gasförmig vorliegende Arbeitsmittel 7b wird abgekühlt und in einem Kondensationsbereich 5 kondensiert. Dem Kondensationsbereich 5 wird zur Kühlung des Arbeitsmittels 7b ein Kühlmittel 50a, beispielsweise in Form von Kühlwasser oder Kühlluft, zugeführt, das als erwärmtes Kühlmittel 50b den Kondensationsbereich 5 wieder verlässt. Alternativ kann im Kondensationsbereich 5 auch über eine Direktkühlung oder Hybridkühlung gekühlt werden. Das kondensierte Arbeitsmittel 7c wird über eine Pumpe 6 geführt, durch welche der Druck im Arbeitsmittel 7c erhöht wird. Das unter höherem Druck stehende bzw. komprimierte Arbeitsmittel 7d wird anschließend insgesamt erneut der Turbine 4 zur Kühlung des Generators und zur Schmierung der Dichtungen in der Turbine 4 zugeführt. Nach Austritt des Arbeitsmittels 7e aus der Turbine 4 wird erneut mittels des durch Geothermie oder eines industriellen Prozesses beheizten Fluids 20a Wärme an das Arbeitsmittel 7e übertragen und damit der Kreislauf geschlossen.

Figur 2 zeigt einen zweiten VPT-Kreisprozess 10. Die in Figur 1 und Figur 2 verwendeten gleichen Bezugszeichen entsprechen gleichen Einheiten. Als Arbeitsmittel 7e wird beispielsweise Propadien, Dimethylester, Cyclopropan, Propin oder Iodotrifluoromethan eingesetzt. Der Verfahrensablauf in Figur 2 entspricht dabei vom Wärmetauschbereich 3 bis zum Erreichen der Pumpe 6 dem zu Figur 1 bereits beschriebenen. Das kondensierte Arbeitsmittel 7c wird auch hier über die Pumpe 6 geführt, durch welche der Druck im Arbeitsmittel 7c erhöht wird. Das unter höherem Druck stehende Arbeitsmittel 7d wird anschließend in einen ersten Teilstrom 7d' und einen zweiten Teilstrom 7d" aufgeteilt. Der erste Teilstrom 7d' wird erneut der Turbine 4 zur Kühlung des Generators und zur Schmierung der Dichtungen in der Turbine 4 zugeführt. Nach Austritt des ersten Teilstroms aus der Turbine 4 wird dieser mit dem zweiten Teilstrom 7d" zusammengeführt. An das in Summe gebildete Arbeitsmittel 7e wird erneut mittels des durch Geothermie oder eines industriellen Prozesses beheizten Fluids 20a Wärme übertragen und damit der Kreislauf geschlossen.

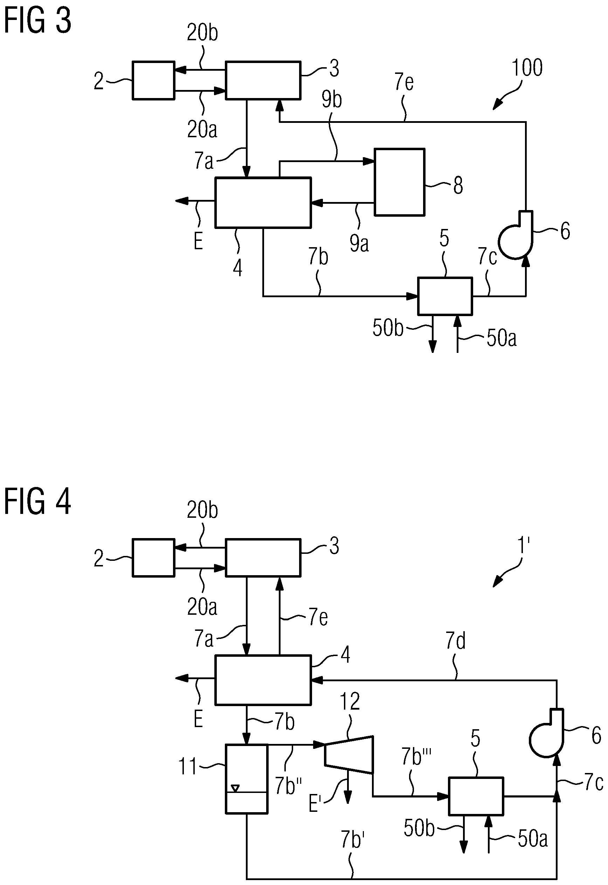

Figur 3 zeigt einen dritten VPT-Kreisprozess 100. Die in den Figuren 1 bis 3 verwendeten gleichen Bezugszeichen entsprechen gleichen Einheiten. Als Arbeitsmittel 7e wird beispielsweise Propadien, Dimethylester, Cyclopropan, Propin oder Iodotrifluoromethan eingesetzt. Der Verfahrensablauf in Figur 3 entspricht dabei vom Wärmetauschbereich 3 bis zum Erreichen der Pumpe 6 dem zu Figur 1 bereits beschriebenen. Das kondensierte Arbeitsmittel 7c wird auch hier über die Pumpe 6 geführt, durch welche der Druck im Arbeitsmittel 7c erhöht wird. Das unter höherem Druck stehende Arbeitsmittel 7d wird anschließend unmittelbar wieder dem Wärmetauschbereich 3 zugeführt. An das Arbeitsmittel 7e wird erneut mittels des durch Geothermie oder eines industriellen Prozesses beheizten Fluids 20a Wärme übertragen und damit der Kreislauf geschlossen. Zur Kühlung des Generators und zur Schmierung der Dichtungen in der Turbine 4 ist ein eigner Kühl- und Schmiermittelkreislauf 8 vorgesehen, welcher vom Arbeitsmittelkreislauf getrennt der Turbine 4 ein Kühl- und Schmiermittel 9a, 9b zuführt und von dieser wieder abführt.

Figur 4 zeigt einen vierten VPT-Kreisprozess 1'. Es ist eine Niedertemperaturwärmequelle 2 vorhanden, welche ein mittels Geothermie oder Abwärme eines industriellen Prozesses erwärmtes Fluid 20a bereitstellt. Ein mittels Geothermie bereitgestelltes Fluid ist insbesondere Thermalwasser. Das erwärmte Fluid 20a durchläuft einen Wärmetauschbereich 3, in welchem das erwärmte Fluid 20a einen Teil der darin gespeicherten Wärmeenergie an ein Arbeitsmittels 7e überträgt, das den Wärmetauschbereich 3 ebenfalls durchläuft. Als Arbeitsmittel 7e wird beispielsweise Propadien, Dimethylester, Cyclopropan, Propin oder Iodotrifluoromethan eingesetzt. Bei dem Wärmetauschbereich 3 handelt es sich beispielsweise um einen Wärmetauscher, insbesondere einen Kreuzstrom- oder Gegenstromwärmetauscher. Das mittels des erwärmten Fluids 20a erwärmte Arbeitsmittel 7a gelangt vom Wärmetauschbereich 3 in eine "Variable Phase" Turbine 4 (VPT) und wird dort mittels einer Düse expandiert.

Der erzeugte Strahl an Arbeitsmittel 7b weist kinetische Energie auf, welche unter Erzeugung elektrischer Energie E einen Rotor eines Generators antreibt. Das zumindest teilweise gasförmig vorliegende Arbeitsmittel 7b wird einem Abscheider 11 zugeführt, in welchem in flüssiger Phase vorliegendes Arbeitsmittel 7b' von in gasförmiger Phase vorliegendem Arbeitsmittel 7b" abgetrennt wird. Das in gasförmiger Phase vorliegende Arbeitsmittel 7b" wird einer Gasturbine 12 zugeführt, mittels der weitere elektrische Energie E' erzeugt wird. Nach der Gasturbine 12 wird das Arbeitsmittel 7b''', das zumindest teilweise gasförmig vorliegt, in einem Kondensationsbereich 5 kondensiert. Dem Kondensationsbereich 5 wird zur Kühlung des Arbeitsmittels 7b ein Kühlmittel 50a, beispielsweise in Form von Kühlwasser oder Kühlluft, zugeführt, das als erwärmtes Kühlmittel 50b den Kondensationsbereich 5 wieder verlässt. Alternativ kann im Kondensationsbereich 5 auch über eine Direktkühlung oder Hybridkühlung gekühlt werden. Das im Kondensationsbereich 5 kondensierte Arbeitsmittel 7c wird mit dem im Abscheider 11 abgeschiedenen Anteil an flüssigem Arbeitsmittel 7b' über eine Pumpe 6 geführt, durch welche der Druck im Arbeitsmittel 7c, 7b' erhöht wird. Das unter höherem Druck stehende bzw. komprimierte Arbeitsmittel 7d wird anschließend insgesamt erneut der Turbine 4 zur Kühlung des Generators und zur Schmierung der Dichtungen in der Turbine 4 zugeführt. Nach Austritt des Arbeitsmittels 7e aus der Turbine 4 wird erneut mittels des durch Geothermie oder eines industriellen Prozesses beheizten Fluids 20a Wärme an das Arbeitsmittel 7e übertragen und damit der Kreislauf geschlossen.

Die in den Figuren 1 bis 4 beispielhaft aufgeführten VPT-Kreisprozesse können von einem Fachmann aber ohne weiteres noch verändert werden. So kann beispielsweise der Kondensationsbereich 5 ebenfalls über einen Kühlmittelkreislauf mit Kühlmittel 50a versorgt werden und dergleichen. Weiterhin könnte beispielsweise auf die Gasturbine 12 in Figur 4 verzichtet werden, so dass das sich in gasförmiger Phase befindliche Arbeitsmittel 7b" vom Abscheider 11 direkt in den Kondensationsbereich 5 geführt wird. In Figur 4 könnte zwischen der Gasturbine 12 und dem Kondensationsbereich 5 ein weiterer Abscheider angeordnet sein, um in flüssiger Phase vorliegendes Arbeitsmittel der Pumpe 6 unmittelbar zuzuführen, so dass nach der Gasturbine 12 nur in gasförmiger Phase vorliegendes Arbeitsmittel dem Kondensationsbereich 5 zugeführt wird. Weiterhin können Regelventile, Überdruckventile, Druckmesseinrichtungen usw. in einem VPT-Kreisprozess vorhanden sein.

**Patentansprüche**

1. Verfahren zur Erzeugung elektrischer Energie mittels mindestens einer Niedertemperaturwärmequelle (2), wobei ein VPT-Kreisprozess (1, 10, 100) durchgeführt wird, **dadurch gekennzeichnet, dass** als Arbeitsmittel für den VPT-Kreisprozess (1, 10, 100)

   a) mindestens ein Stoff aus der Gruppe umfassend Cycloalkane, Alkene, Diene oder Alkine verwendet wird, welcher zwei bis sechs Kohlenstoffatome aufweist, oder

b) mindestens ein Alkan aus der Gruppe umfassend 1-Chloro-1,2,2,2-tetrafluoroethan, 1-Chloro-1,1-difluoroethan, Methylchlorid, Bromodifluoromethan, Iodotrifluoromethan, 2-Methylpropan, oder
c) mindestens ein Ether, welcher zwei Kohlenstoffatome aufweist,

eingesetzt wird.

2. Verfahren nach Anspruch 1,
**dadurch gekennzeichnet, dass** als Arbeitsmittel für den VPT-Kreisprozess (1, 10, 100) ein Stoff aus der Gruppe umfassend Cyclopropan, trans-2-Buten, Isobuten, 1-Chloro-2,2-difluoroethylen, 1,2-Butadien, 1,3-Butadien, Propadien, Propin, Iodotrifluoromethan, Dimethylether eingesetzt wird.

3. Verfahren nach Anspruch 1 oder Anspruch 2,
**dadurch gekennzeichnet, dass** als Arbeitsmittel für den VPT-Kreisprozess (1, 10, 100) ein Stoff aus der Gruppe umfassend Cyclopropan, Propadien, Propin, Iodotrifluoromethan, Dimethylether eingesetzt wird.

4. Verfahren zur Erzeugung elektrischer Energie mittels mindestens einer Niedertemperaturwärmequelle (2), wobei ein VPT-Kreisprozess (1, 10, 100) durchgeführt wird, **dadurch gekennzeichnet, dass** als Arbeitsmittel für den VPT-Kreisprozess (1, 10, 100) mindestens ein Stoff eingesetzt wird, der in flüssiger Phase bei einer Temperatur von 115°C eine Fugazität von größer als 17 bar aufweist.

5. Verfahren nach Anspruch 4, **dadurch gekennzeichnet, dass** als Arbeitsmittel für den VPT-Prozess ein Stoff aus der Gruppe umfassend 1-Chloro-1,2,2,2-tetrafluoroethan, 1-Chloro-1,1-difluoroethan, 2-Methylpropan, Isobuten, Cyclopropan, Propadien, Propin, Dimethylether, eingesetzt wird.

6. Verfahren nach einem der Ansprüche 1 bis 5,
**dadurch gekennzeichnet, dass** die Niedertemperaturwärmequelle (2) Temperaturen im Bereich von 90 bis 400°C bereitstellt.

7. Verfahren nach einem der Ansprüche 1 bis 6,
**dadurch gekennzeichnet, dass** die Niedertemperaturwärmequelle (2) Temperaturen im Bereich von 100 bis 250°C bereitstellt.

8. Verfahren nach einem der Ansprüche 1 bis 7,
**dadurch gekennzeichnet, dass** die Niedertemperaturwärmequelle (2) durch Geothermie oder Abwärme eines industriellen Prozesses bereitgestellt wird.

9. Verwendung eines Arbeitsmittels in Form

a) mindestens eines Stoffs aus der Gruppe umfassend Cycloalkane, Alkene, Diene oder Alkine, welcher zwei bis sechs Kohlenstoffatome aufweist, oder
b) mindestens eines Alkans aus der Gruppe umfassend 1-Chloro-1,2,2,2-tetrafluoroethan, 1-Chloro-1,1-difluoroethan, Methylchlorid, Bromodifluoromethan, Iodotrifluoromethan, 2-Methylpropan, oder
c) mindestens eines Ethers, welcher zwei Kohlenstoffatome aufweist,

für einen VPT-Kreisprozess (1, 10, 100) zur Erzeugung elektrischer Energie mittels mindestens einer Niedertemperaturwärmequelle (2).

10. Verwendung eines Arbeitsmittels in Form mindestens eines Stoffs, der in flüssiger Phase bei einer Temperatur von 115°C eine Fugazität von größer als 17 bar aufweist, für einen VPT-Kreisprozess (1, 10, 100) zur Erzeugung elektrischer Energie mittels mindestens einer Niedertemperaturwärmequelle (2).

11. Verwendung nach Anspruch 10, wobei der mindestens eine Stoff in flüssiger Phase bei einer Temperatur von 115°C eine Fugazität von größer als 20 bar, insbesondere von größer als 25 bar, aufweist.

12. Verwendung nach einem der Ansprüche 9 bis 11, wobei durch die Niedertemperaturwärmequelle (2) eine Temperatur im Bereich von 90 bis 400°C, insbesondere im Bereich von 100 bis 250°C, bereitgestellt wird.

**Claims**

1. Method for generating electric energy by means of at least one low-temperature heat source (2), wherein a VPT cyclic process (1, 10, 100) is carried out, **characterised in that** as a working substance for the VPT cyclic process (1, 10, 100)

   a) at least one substance from the group that includes cycloalkane, alkenes, dienes, or alkines having two to six carbon atoms is used, or
   b) at least one alkane from the group that includes 1-chloro-1,2,2,2-tetrafluoroethane, 1-chloro-1,1-difluoroethane, methyl chloride, bromodifluoromethane, iodotrifluoromethane, and 2-methylpropane, or
   c) at least one ether having two carbon atoms

   is used.

2. Method according to claim 1, **characterised in that** a substance from the group that includes cyclopropane, trans-2-butene, isobutene, 1-chloro-2,2-difluoroethylene, 1,2-butadiene, 1,3-butadiene, propadiene, propine, iodotrifluoromethane, and dimethyl ether is used as the working substance for the VPT cyclic process (1, 10, 100).

3. Method according to claim 1 or claim 2, **characterised in that** a substance from the group that includes cyclopropane, propadiene, propine, iodotrifluoromethane, and dimethyl ether is used as the working substance for the VPT cyclic process (1, 10, 100).

4. Method for generating electric energy by means of at least one low-temperature heat source (2), wherein a VPT cyclic process (1, 10, 100) is carried out, **characterised in that** at least one substance having a fugacity exceeding 17 bar in the liquid phase at a temperature of 115°C is used as the working substance for the VPT cyclic process (1, 10, 100).

5. Method according to claim 4, **characterised in that** a substance from the group that includes 1-chloro-1,2,2,2-tetrafluoroethane, 1-chloro-1,1-difluoroethane, 2-methylpropane, isobutene, cyclopropane, propadiene, propine, and dimethyl ether is used as the working substance for the VPT process.

6. Method according to one of claims 1 to 5, **characterised in that** the low-temperature heat source (2) makes temperatures in the 90-to-400°C range available.

7. Method according to one of claims 1 to 6, **characterised in that** the low-temperature heat source (2) makes temperatures in the 100-to-250°C range available.

8. Method according to one of claims 1 to 7, **characterised in that** the low-temperature heat source (2) is provided by means of geothermal energy or waste heat from an industrial process.

9. Use of a working substance in the form of

   a) at least one substance from the group that includes cycloalkanes, alkenes, dienes, or alkines having two to six carbon atoms, or
   b) at least one alkane from the group that includes 1-chloro- 1,2, 2-tetrafluoroethane, 1-chloro-1,1-difluoroethane, methyl chloride, bromodifluoromethane, iodotrifluoromethane, and 2-methylpropane, or
   c) at least one ether having two carbon atoms

   for a VPT cyclic process (1, 10, 100) for generating electric energy by means of at least one low-temperature heat source (2).

10. Use of a working substance in the form of at least one substance having a fugacity exceeding 17 bar in the liquid phase at a temperature of 115°C for a VPT cyclic process (1, 10, 100) for generating electric energy by means of at least one low-temperature heat source (2).

11. Use according to claim 10, with the at least one substance having a fugacity exceeding 20 bar, in particular exceeding 25 bar, in the liquid phase at a temperature of 115°C.

**12.** Use according to one of claims 9 to 11, with a temperature in the 90-to-400°C range, particularly the 100-to-250°C range, being made available by the low-temperature heat source (2).

**Revendications**

**1.** Procédé de production d'énergie électrique au moyen d'au moins une source (2) de chaleur à basse température, en effectuant un cycle (1, 10, 100) VPT, **caractérisé en ce que**, comme fluide de travail pour le cycle (1, 10, 100) VPT,

a) on utilise au moins une substance choisie dans le groupe comprenant les cycloalcanes, les alcènes, les diènes ou les alcynes, qui a de deux à six atomes de carbone ou
b) on utilise au moins un alcane choisi dans le groupe comprenant le 1-chloro-1,2,2,2-tetrafluoroéthane, le 1-chloro-1,1-difluoroéthane, le chlorure de méthyle, le bromodifluorométhane, l'iodotrifluorométhane, le 2-méthylpropane ou
c) au moins un étheroxyde, qui a deux atomes de carbone.

**2.** Procédé suivant la revendication 1,
**caractérisé en ce que** l'on utilise comme fluide de travail pour le cycle (1, 10, 100) VPT, une substance choisie dans le groupe comprenant le cylopropane, le trans-2butène, l'isobutène, le 1-chloro-2,2-difluoroéthylène, le 1,2-butadiène, le 1,3 butadiène, le propadiène, le propine, l'iodotrifluorométhane, l'oxyde de diméthyle.

**3.** Procédé suivant la revendication 1 ou la revendication 2,
**caractérisé en ce que** l'on utilise comme fluide de travail, pour le cycle (1, 10, 100) VPT, une substance choisie dans le groupe comprenant le cyclopropane, le propadiène, le propine, l'iodotrifluorométhane, l'oxyde de diméthyle.

**4.** Procédé de production d'énergie électrique au moyen d'au moins une source (2) de chaleur à basse température, en effectuant un cycle (1, 10, 100) VPT, **caractérisé en ce que** l'on utilise comme fluide de travail pour le cycle (1, 10, 100) VPT au moins une substance, qui a, en phase liquide, à une température de 115°C, une fugacité plus grande que 17 bar.

**5.** Procédé suivant la revendication 4, **caractérisé en ce que** l'on utilise comme fluide de travail, pour le cycle VPT, une substance choisie dans le groupe comprenant le 1-chloro-1,2,2,2-tétrafluoroéthane, le 1-cloro-1,1-difluoroéthane, le 2-méthylpropane, l'isobutène, le cyclopropane, le propadiène, le propine, l'oxyde de diméthyle.

**6.** Procédé suivant l'une des revendications 1 à 5,
**caractérisé en ce que** la source (2) de chaleur à basse température met à disposition des températures dans la plage de 90 à 400°C.

**7.** Procédé suivant l'une des revendications 1 à 6,
**caractérisé en ce que** la source (2) de chaleur à basse température met à disposition des températures dans la plage de 100 à 250°C.

**8.** Procédé suivant l'une des revendications 1 à 7,
**caractérisé en ce que** l'on met la source (2) de chaleur à basse température à disposition par géothermie ou par de la chaleur résiduelle d'un processus industriel.

**9.** Utilisation d'un fluide de travail sous la forme

a) on utilise au moins une substance choisie dans le groupe comprenant les cycloalcanes, les alcènes, les diènes ou les alcynes, qui a de deux à six atomes de carbone ou
b) on utilise au moins un alcane choisi dans le groupe comprenant le 1-chloro-1,2,2,2-tetrafluoroéthane, le 1-chloro-1,1-difluoroéthane, le chlorure de méthyle, le bromodifluorométhane, l'iodotrifluorométhane, le 2-méthylpropane ou
c) au moins un étheroxyde, qui a deux atomes de carbone,

pour un cycle (1, 10, 100) VPT de production d'énergie électrique au moyen d'au moins une source (2) de chaleur à basse température.

10. Utilisation d'un fluide de travail sous la forme d'au moins une substance, qui a, à l'état liquide, à une température de 115°C, une fugacité plus grande que 17 bar, pour un cycle (1, 10, 100) VPT de production d'énergie électrique au moyen d'au moins une source (2) de chaleur à basse température.

11. Utilisation suivant la revendication 10, dans laquelle la au moins une substance a, en phase liquide, à une température de 115°C, une fugacité plus grande que 20 bar, notamment plus grande que 25 bar.

12. Utilisation suivant l'une des revendications 9 à 11, dans laquelle on met, par la source (2) de chaleur à basse température, à disposition une température dans la plage de 90 à 400°C, notamment dans la plage de 100 à 250°C.

# FIG 1

# FIG 2

**FIG 3**

**FIG 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7093503 B1